# EUROPEAN PATENT APPLICATION

(11) **EP 2 552 118 A1**
(43) Date of publication of application: **30.01.2013**
(21) Application number: 12160161.1
(22) Date of filing: 19.03.2012
(51) Int. Cl.: H04N 13/00

(54) **A three-dimensional image playing apparatus and a method for controlling a three-dimensional image**

(30) Priority: 27.07.2011 KR 20110074784
(71) Applicant: Samsung Electronics Co., Ltd., Suwon-si, Gyeonggi-do, 443-742 (KR)
(72) Inventor: Kim, Jung-su, Gyeonggi-do (KR); Oh, Keum-yong, Gyeonggi-do (KR); Oh, Sung-bo, Seoul (KR); Lee, Jung-sub, Gyeonggi-do (KR)
(74) Representative: Hancox, Jonathan Christopher

(57) **Abstract**

A ₃D image playing apparatus is provided. The ₃D image playing apparatus includes a plurality of speakers 700 which output a plurality of test sounds, a receiver 720 which receives the test sounds output from the plurality of speakers, a location detector 740 which detects a location of the receiver by receiving feedback of the test sounds received at the receiver and analyzing the test sounds, a ₃D processor 760 which adjusts a 3D effect of a 3D image according to the location detected by the location detector, and a display unit 780 which outputs the 3D image having the 3D effect adjusted by the ₃D processor.

## Description

Methods and apparatuses consistent with exemplary embodiments relate to a three-dimensional (3D) image playing apparatus which detects a location of a user and adaptively provides an optimal 3D image according the location of the user, and a method for controlling a 3D image thereof.

A 3-dimensional (3D) image refers to an image that creates depth on an image by adjusting a left-eye pixel and a right-eye pixel based on a binocular illusion phenomenon, and provides a user with a 3D image.

In the case of such a 3D image, a location of the user can affect the degree of 3D effect that a user can experience. The difference in the 3D effect occurs for the reason that the 3D effect is affected by depth. Depth refers to a sense of depth of the 3D image and is one of the factors used in generating the 3D effect of the 3D image.

In a method of the related-art, if the depth has a fixed value without considering a user's location, a problem exists in that a contents provider is unable to transmit the correct depth that the provider intends to provide to the user.

Therefore, it is difficult for the user to experience an optimal 3D image; and, if the depth of the 3D image is artificially adjusted without information on the user's location, the user may easily feel fatigue.

At least in preferred embodiments, the invention provides a 3D image playing apparatus, which detects a location of a user using a test sound and adjusts disparity of a 3D image according to the location of the user, thereby providing an optimal 3D image, and a method for controlling a 3D image thereof.

The disparity recited herein refers to binocular disparity of the user. The disparity is a main factor affecting a 3D effect of the 3D image. That is, the user views an object at different angles due to the disparity and images entering the user's eyes have different images. If the two images entering the eyes of the user are transmitted to the brain through the retinas, the brain correctly combines the two pieces of information and provides an original 3D stereoscopic image.

According to one aspect, the invention provides a 3D image playing apparatus comprising: a plurality of speakers which output a plurality of test sounds, a receiver which receives the output test sounds, a location detector which detects a location of the receiver by receiving feedback of the test sounds and analyzing the test sounds, a 3D processor which adjusts a 3D effect of a 3D image based on the location detected by the location detector, and a display unit which outputs the 3D image having the 3D effect adjusted by the 3D processor.

The location detector may detect the location of the receiver by analyzing a time difference between a time at which each of the plurality of speakers outputs the test sound and a time at which the receiver receives each of the test sounds, and recognizing a distance between each of the speakers and the receiver.

In response to the receiver being located closer than a reference location distanced from the 3D image playing apparatus by a predetermined distance, the 3D processor may increase disparity of the 3D image, and in response to the receiver being located farther than the reference location, the 3D processor may reduce the disparity of the 3D image.

The 3D processor may increase or reduce the disparity so that a depth recognized at the location of the receiver is the same as a depth recognized at the reference location.

The 3D image playing apparatus may further comprise a storage unit which stores depth information and/or disparity information according to the location of the receiver, and the 3D processor may adjust the 3D effect of the 3D image based on information stored in the storage unit.

According to another aspect, the invention provides a method for controlling a 3D image of a 3D image playing apparatus, the method comprising: outputting a plurality of test sounds using a plurality of speakers, in response to the plurality of test sounds being received at a receiver, detecting a location of the receiver by receiving feedback of the test sounds and analyzing the test sounds, adjusting a 3D effect of a 3D image according to the location of the receiver, and outputting the 3D image having the adjusted 3D effect.

The detecting the location of the receiver may comprise detecting the location of the receiver by analyzing a time difference between a time at which each of the plurality of speakers outputs the test sound and a time at which the receiver receives each of the test sounds and recognizing a distance between each of the plurality of speakers and the receiver.

The adjusting the 3D effect of the 3D image may comprise, in response to the receiver being located closer than a reference location distanced from the 3D image playing apparatus by a predetermined distance, increasing disparity of the 3D image, and in response to the receiver being located farther than the reference location, reducing the disparity of the 3D image.

The adjusting the 3D effect of the 3D image may comprise increasing or reducing the disparity until a depth at the location of the receiver is the same as a depth at the reference location.

The adjusting the 3D effect of the 3D image may comprise reading out depth information or disparity information which is pre-stored according to the location of the receiver, and adjusting the 3D effect of the 3D image.

According to another aspect, the invention provides a 3D image playing apparatus comprising: a location sensor which detects a location of a user, a 3D processor which adjusts a 3D effect of a 3D image by increasing or reducing disparity so that a depth recognized at the location of the user is the same as a depth recognized at a reference location, and a display unit which outputs the 3D image having the 3D effect adjusted by the 3D processor.

The location sensor may comprise an infrared detector which measures a distance from the 3D image playing apparatus to the user.

The location sensor may comprise an ultrasonic wave detector which measures a distance from the 3D image playing apparatus to the user.

The location sensor may comprise a camera which photographs the user and estimates a distance from the 3D image playing apparatus to the user according to a size of a photographed user image.

The display unit may display a user interface window through which the user directly inputs distance data and the location sensor may detect the location of the user based on the distance data input through the user interface window.

According to another aspect, the invention provides a method for controlling a 3D image of a 3D image playing apparatus, the method comprising: detecting a location of a user, adjusting a 3D effect of a 3D image by increasing or reducing disparity so that a depth recognized at the location of the user is the same as a depth recognized at a reference location, and outputting the 3D image having the adjusted 3D effect.

The detecting the location of the user may comprise measuring a distance from the 3D image playing apparatus to the user, using infrared rays.

The detecting the location of the user may comprise measuring a distance from the 3D image playing apparatus to the user, using ultrasonic waves.

The detecting the location of the user may comprise obtaining a user image by photographing the user using a camera, and measuring a distance from the 3D image playing apparatus to the user, according to a size of the user image.

The detecting the location of the user may comprise displaying a user interface window through which the user directly inputs distance data, and detecting the location of the user based on the input distance data.

According to the exemplary embodiments described above, the location of the user is detected using the test sounds, and the disparity is automatically adjusted according to the detected location of the user, so that the optimal 3D image can be provided for the user.

Additional aspects and advantages of the exemplary embodiments will be set forth in the detailed description, will be obvious from the detailed description, or may be learned by practicing the exemplary embodiments.

The above and/or other aspects will be more apparent by describing in detail exemplary embodiments, with reference to the accompanying drawings, in which:
FIG. 1 is a view explaining a 3D image which is displayed on a screen according to the positions of a left-eye pixel and a right-eye pixel;
FIG. 2 is a view illustrating increased depth which results from changing a position of a 3D image;
FIG. 3 is a view illustrating reduced depth which results from changing a position of a 3D image;
FIG. 4 is a view explaining a process of processing an image when adjusting depth;
FIG. 5 is a schematic block diagram illustrating a 3D image playing apparatus according to an exemplary embodiment;
FIG. 6 is a view illustrating a user interface (UI) on a display screen, through which a user directly inputs distance data, according to another exemplary embodiment;
FIG. 7 is a schematic block diagram illustrating a 3D image playing apparatus using a test sound, according to an exemplary embodiment;
FIG. 8 is a view explaining a process of detecting a location of a user by using a test sound, according to an exemplary embodiment;
FIG. 9 is a view explaining a process of calculating a time difference between an output test sound and a received test sound, according to an exemplary embodiment;
FIG. 10 is a view explaining a method for controlling a 3D image of a 3D image playing apparatus by using an image playing apparatus, according to another exemplary embodiment;
FIG. 11 is a flowchart illustrating a method for controlling a 3D image, according to another exemplary embodiment; and
FIG. 12 is a flowchart illustrating a method for controlling a 3D image, according to another exemplary embodiment.

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

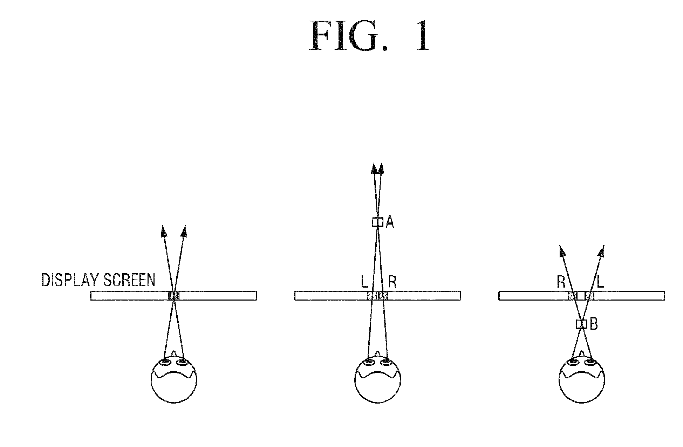

FIG. 1 is a view to explain a 3D image which is displayed on a screen according to positions of a left-eye pixel and a right-eye pixel.

Referring to FIG. 1, a display position of a 3D image varies according to the disparity between a left-eye pixel (L) and a right-eye pixel (R).

That is, referring to the left drawing of FIG. 1, in response to the left-eye pixel (L) and the right-eye pixel (R) overlapping each other, a 3D image is located on the display screen. In a state where the left-eye pixel (L) is located on the left and the right-eye pixel (R) is located on the right with reference to a view direction of a user, in response to a predetermined difference value between the left-eye pixel (L) and the right-eye pixel (R) being increased, the 3D image moves inwards on the display screen. On the other hand, in a state where the right-eye pixel (R) is located on the left and the left-eye pixel (L) is located on the right with reference to the view direction of the user, if a predetermined difference value between the left-eye pixel and the right-eye pixel is increased, the 3D image moves outwards on the display screen.

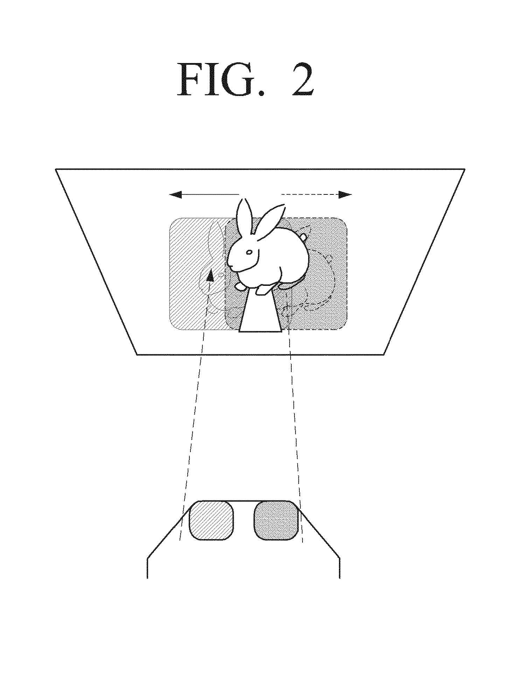

FIG. 2 is a view illustrating increased depth which results from changing the disparity of a 3D image. Referring to FIG. 2, a left-eye pixel (L) is located on the left and a right-eye pixel (R) is located on the right from a view direction of a user and the depth is increased by increasing disparity between the left-eye pixel (L) and the right-eye pixel (R).

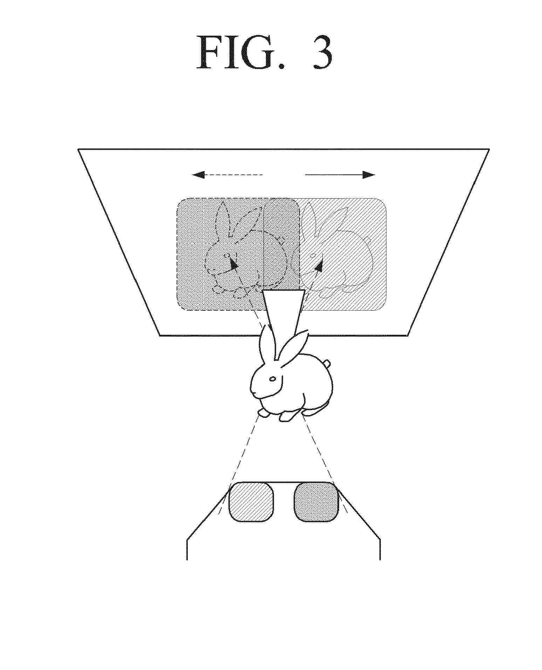

FIG. 3 is a view illustrating reduced depth which results from changing the disparity of the 3D image. Referring to FIG. 3, the left-eye pixel is located on the right and the right-eye pixel (R) is located on the left from the view direction of the user and the depth is reduced by reducing the disparity between the left-eye pixel (L) and the right-eye pixel (R).

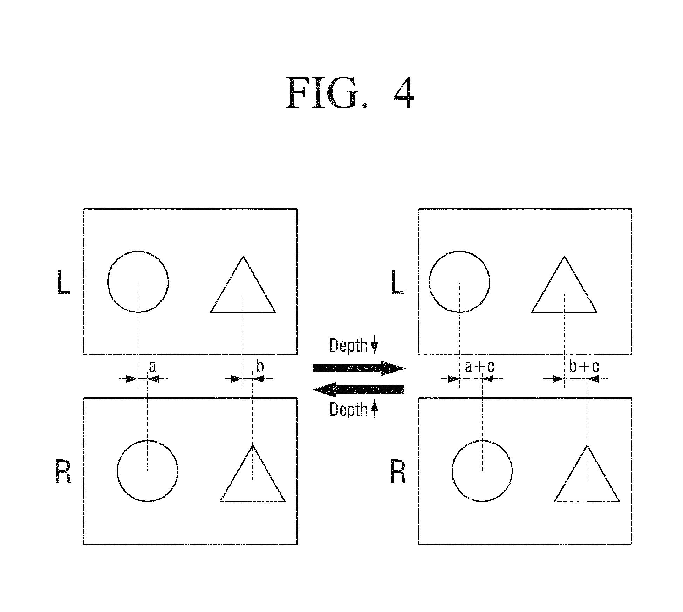

FIG. 4 is a view explaining the processing of an image when adjusting depth. Referring to FIG. 4, both a left-eye image (L) and a right-eye image (R) are displayed to show a position difference between the same objects on the left-eye image (L) and the right-eye image (R). On the left screen of FIG. 4, a position difference between circular objects on the left-eye image (L) and the right-eye image is 'a,' and a position difference between triangular objects on the left-eye image (L) and the right-eye image (R) is 'b,.

In order to reduce the depth, a 3D TV performs image-processing with respect to each object so that the position difference between the same objects on the left-eye image (L) and the right-eye image (R) increases.

In particular, in order to reduce the depth, the position differences between the objects are changed equally so that the position difference between the circular objects on the left-eye image (L) and the right-eye image (R) becomes 'a+c', and the position difference between the triangular objects on the left-eye image (L) and the right-eye image (R) becomes 'b+c', as shown in the right screen of FIG. 4.

Accordingly, the depth on the entire screen including the circular object and the triangular object is reduced.

On the other hand, in order to increase the depth, the 3D TV performs image processing with respect to each object so that the position difference between the same objects on the left-eye image (L) and the right-eye image (R) is reduced.

In particular, in response to a manipulation command to increase the depth being input in the state of the right screen of FIG. 4, image-processing is performed with respect to each object so that the position difference between the circular objects on the left-eye image (L) and the right-eye image (R) becomes '(a+c)-c=a' and the position difference between the triangular objects on the left-eye image (L) and the right-eye image (R) becomes '(b+c)-c=b', as shown in the left screen of FIG. 4. In other words, the position differences between the objects are changed equally.

Accordingly, the depth of the entire screen including the circular object and the triangular object, is increased.

The position difference may be changed by moving only the position of the object included in the left-eye (L), moving only the position of the object included in the right-eye image (R), or moving both the position of the object included in the left-eye image (L) and the position of the object included in the right-eye image (R).

Also, the methods for processing the image to reduce or increase the depth are merely examples for convenience of explanation. Accordingly, the technical idea described in the present disclosure may be applied to any other method for processing an image to increase or reduce the depth.

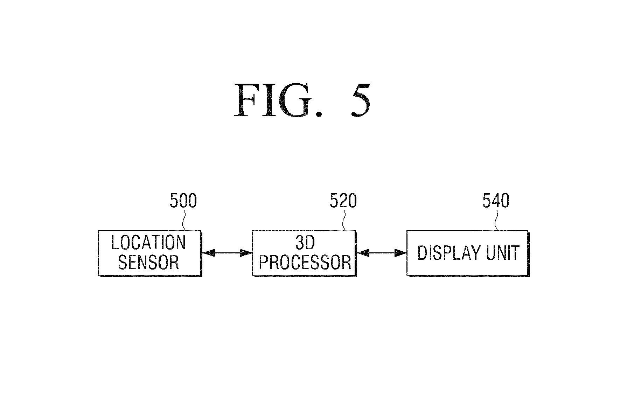

FIG. 5 is a schematic block diagram illustrating a 3D image playing apparatus according to an exemplary embodiment. Referring to FIG. 5, a 3D image playing apparatus comprises a location sensor 500, a 3D processor 520, and a display unit 540.

The location sensor 500 detects a location of a user. The location sensor 500 may be configured in various forms according to exemplary embodiments.

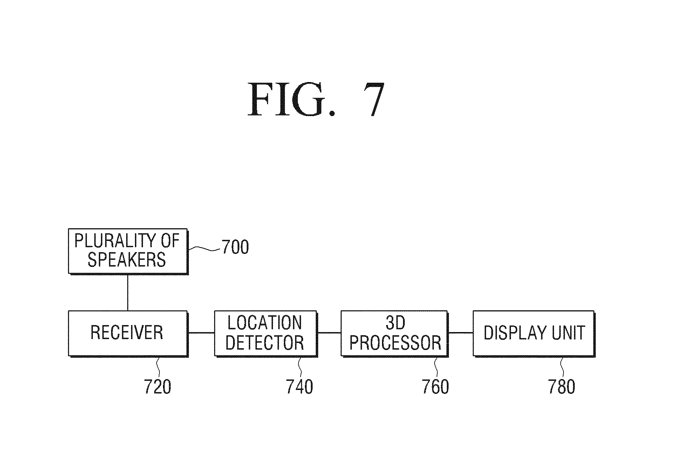

For example, the location sensor 500 may detect the location of the user using a test sound. This will be explained in detail, below, with reference to FIG. 7.

As another example, the location sensor 500 may comprise an infrared detector to detect a distance to a user using infrared rays. In this case, the location sensor 500 measures a distance between the 3D image playing apparatus and the user by emitting infrared rays toward the user located in front of a display screen of the 3D image playing apparatus, receiving the infrared rays reflected from the user, and measuring the time when the infrared rays are received.

Also, the location sensor 500 may comprise an ultrasonic wave detector to measure a distance to the user using ultrasonic waves. In this case, the location sensor 500 measures a distance between the 3D image playing apparatus and the user by emitting ultrasonic waves toward the user located in front of the display screen of the 3D image playing apparatus, collecting the ultrasonic waves reflected from the user, and measuring the time between when the ultrasonic waves are emitted and the time the ultrasonic waves are collected.

Also, the location sensor 500 may comprise a camera for photographing an image of the user. In this case, the location sensor 500 may detect a distance to the user according to a size of the image of the user photographed using the camera. More specifically, the location sensor 500 detects a size of a face portion of the user or an entire size of the user from a reference image frame of the user, which is photographed at a reference location, and a current image frame of the user, which is currently photographed. In this case, the location sensor 500 divides each frame into a plurality of blocks and then detects an average pixel value or a representative value of each block. Accordingly, the location sensor 500 searches for a plurality of blocks that have a pixel value corresponding to user's face color and are also consecutively arranged. Accordingly, the numbers of searched blocks are compared. In response to the number of blocks searched from the current image frame being higher than the number of blocks searched from the reference image frame, the location of the user is recognized as being closer to the 3D image playing apparatus than the reference location, and, in response to the number of blocks searched from the current image frame being lower than the number of blocks searched from the reference image frame, the location of the user is recognized as being farther from the reference location. More precisely, the location sensor 500 may measure the distance between the 3D image playing apparatus and the user by calculating the distance from the reference location in proportion to a difference in the number of searched blocks.

According to another exemplary embodiment, the user may directly input his/her location or a distance between the user and the 3D image playing apparatus. That is, the display unit 540 may generate a user interface window and display it so that the user can input such information through the user interface window.

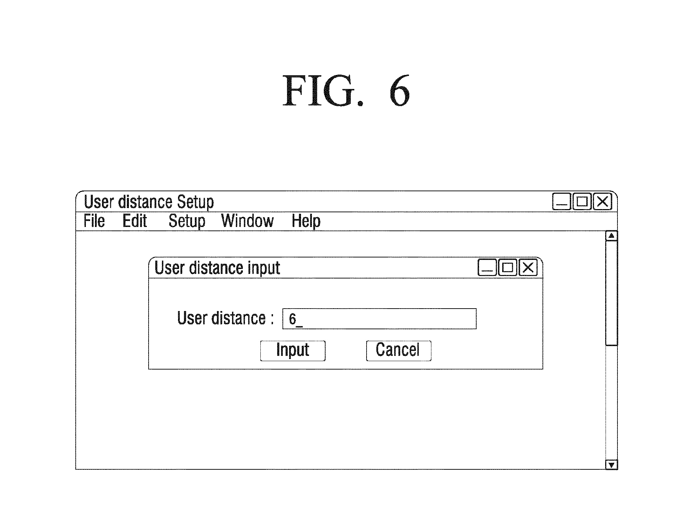

FIG. 6 is a view illustrating an example of the user interface window. Referring to FIG. 6, the user may input distance data regarding his/her location through an input window of a user interface (UI) using an input apparatus such as a remote controller. That is, the user may directly input the distance data (for example, 6) to the input window of the UI displayed on the display screen. The distance data may be provided to the location sensor 500. The location sensor 500 detects the location of the user using the input distance data.

FIG. 6 illustrates the input window of the UI through which number 6 is input. However, this is merely an example and the distance data may be input in various forms according to methods of the UI. Also, in FIG. 6, a unit of length is omitted. However, various units of length such as centimeter (cm) or meter (m), etc., may be set. Also, although only the distance data is input using a number, the distance data may be input along with the user's orientation (left, center, or right), and also may be input along with text or image in addition to the number. Also, the distance data may be input using motion recognition or speech recognition technology instead of using the input apparatus such as the remote controller.

As described above, the location sensor 500 may detect the location of the user in various ways.

The location of the user detected by the location sensor 500 is provided to the 3D processor 520.

The 3D processor 520 adjusts a 3D effect of a 3D image by increasing or reducing disparity so that depth recognized at the user's location is the same as the depth recognized at the reference location.

The display unit 540 outputs the 3D image which has the 3D effect adjusted by the 3D processor 520. Accordingly, the 3D image, which is adaptive to the user's location can be provided.

FIG. 7 is a view schematically illustrating a 3D image playing apparatus using a test sound according to an exemplary embodiment. Referring to FIG. 7, a schematic configuration of the 3D image playing apparatus will be explained.

The 3D image playing apparatus comprises a plurality of speakers 700, a receiver 720, a location detector 740, a 3D processor 760, and a display unit 780.

The plurality of speakers 700 may output a plurality of test sounds. The plurality of speakers may be two or more speakers.

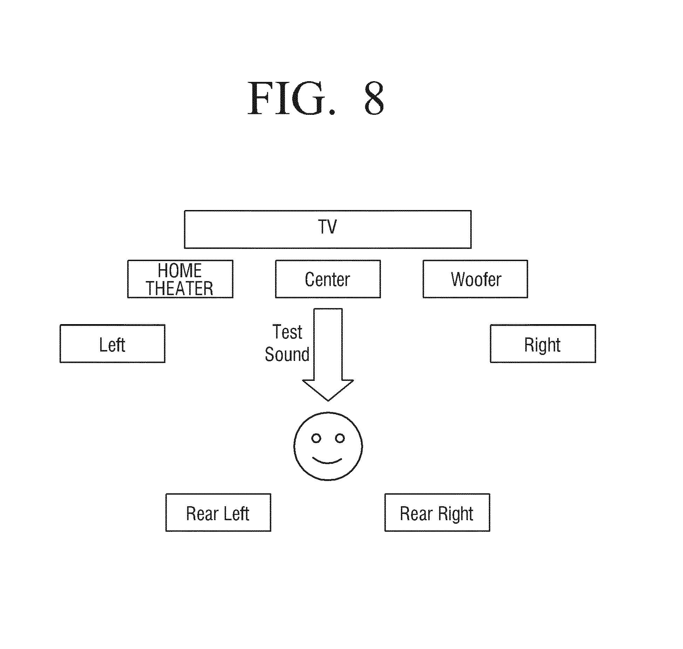

FIG. 8 is a view schematically illustrating a system for detecting a location of a user by outputting test sounds through the plurality of speakers 700. In FIG. 8, the plurality of speakers 700 comprises a center speaker, a woofer, left and right speakers, and rear left and right speakers. Each of the speakers outputs the test sound toward the user.

The receiver 720 may be configured by a microphone to receive a plurality of test sounds output from the plurality of speakers 700. The receiver 720 may be realized by a means for converting an analog sound wave signal into a digital electric signal. The test sound received by the receiver 720 may be converted into a format so that its frequency can be analyzed.

The location detector 740 receives feedback of the plurality of test sounds received by the receiver 720, and analyzes the test sounds. A detailed method for analyzing the plurality of test sounds by the location detector 740 will be explained below.

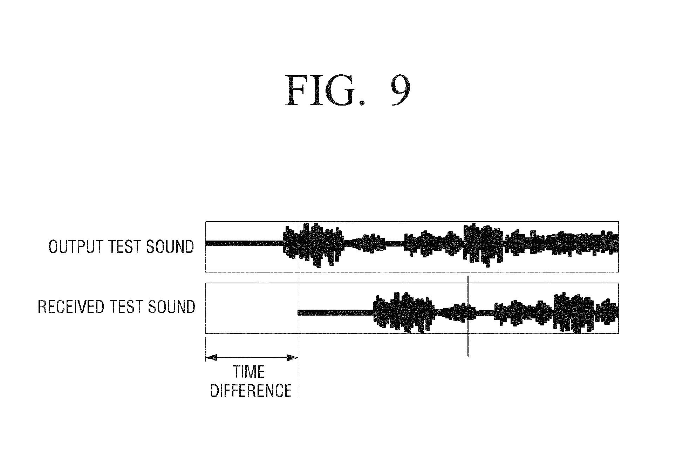

FIG. 9 is a view explaining a process of calculating a time difference between an output test sound and a received test sound according to an exemplary embodiment. Referring to FIG. 9, the plurality of speakers 700 output the test sounds. The plurality of test sounds are received by the receiver 720. The location detector 740 may calculate a difference value between a starting time of the received plurality of test sounds and a starting time of the output plurality of test sounds. The location detector 740 may perform frequency analysis in order to analyze the test sounds, which are sound wave signals.

The location detector 740 calculates the time difference between the test sound output from each of the speakers and the corresponding test sound received by the receiver 720, and calculates a location of the receiver 720, which is the same as the location of the user, using a plurality of pieces of time difference information.

The 3D processor 760 may adjust a 3D effect of a 3D image according to the location of the receiver 720 detected by the location detector 740.

More specifically, the location detector 740 may analyze the time difference between the time at which the test sound is output from each of the plurality of speakers 700 and the time at which the test sound is received by the receiver 720. Based on the time difference analyzed for each of the speakers, a distance between each of the speakers and the receiver 720 may be calculated. By combining the calculated distances, the location of the receiver 720 is detected. At this time, the location of the receiver 720 is the same as the user's location. That is, the receiver 720 may be an external microphone that the user may carry or may be an internal microphone embedded in a remote controller.

If the receiver 720 is located closer than a reference location distanced from the 3D image playing apparatus by a predetermined distance, the 3D processor 760 may increase disparity of the 3D image according to a distance difference to the reference location. Also, in response to the receiver 720 being located farther than the reference location, the 3D processor 760 may reduce the disparity of the 3D image according to a distance difference to the reference location.

The predetermined distance from the 3D image playing apparatus refers to a location in which disparity is set so that the user can view an optimal 3D image. If the disparity has a predetermined value, the depth may change according to the user's observing distance. If the observing distance is invariable, the depth may be changed by changing the disparity. That is, if the user's location changes, the disparity should be changed, accordingly, so that the user can feel constant depth.

According to the exemplary embodiments, the 3D image playing apparatus detects the location of the user and automatically adjusts the disparity according to the user's location, thereby providing an effect where the user can feel optimal depth.

The method for increasing and reducing the disparity of the 3D image is well known to an ordinary skilled person in the related art, and thus a detailed description is omitted.

The display unit 780 may output the 3D image having the 3D effect adjusted by the 3D processor 760 to the outside, and display the 3D image. The user's location away from the display unit is detected by the location detector 740 and the 3D image processed by the 3D processor 760 according to the detected location provides the optimal 3D effect for the user.

That is, the depth is set by adjusting the disparity according to the distance between the user and the display unit 780, so that the user eye fatigue can be minimized and the user can experience maximum 3D effect.

The location detector 740 analyzes the time difference between the test sound outputting time of each of the speakers and the test sound receiving time of the receiver 720. By recognizing the distance between each speaker and the receiver, the location of the receiver 720 may be detected.

In response to the receiver 720 being located closer than the reference location distanced from the 3D image playing apparatus by a predetermined distance, the 3D processor 760 increases the disparity of the 3D image, and in response to the receiver 720 being located farther than the reference location, the 3D processor 760 reduces the disparity of the 3D image.

That is, the disparity of the 3D image is adjusted according to whether or not the receiver 720 is located within the predetermined distance from the 3D image playing apparatus. Specifically, in response to the receiver 720 being located at a short distance, the 3D processor 760 increases the disparity of the 3D image in order to increase the depth. On the other hand, in response to the receiver 720 being located at a long distance, the 3D processor 760 reduces the disparity of the 3D image in order to reduce the depth.

Also, the 3D processor 760 may increase or reduce the disparity so that the depth recognized at the location of the receiver 720 is the same as the depth recognized at the reference location.

According to another exemplary embodiment, the 3D image playing apparatus may further comprise a storage unit (not shown) for storing depth information or disparity information, according to the location of the receiver 720.

The storage unit may adjust the 3D effect of the 3D image based on the stored information. That is, the storage unit may store depth information according to the user's distance from the 3D image playing apparatus.

The 3D processor 760 may adjust the 3D effect of the 3D image by increasing or reducing the disparity so that the depth recognized at the user' s location is the same as the depth recognized at the reference location.

The display unit 780 may output the 3D image, having the 3D effect adjusted by the 3D processor 760 to the outside, and display the 3D image.

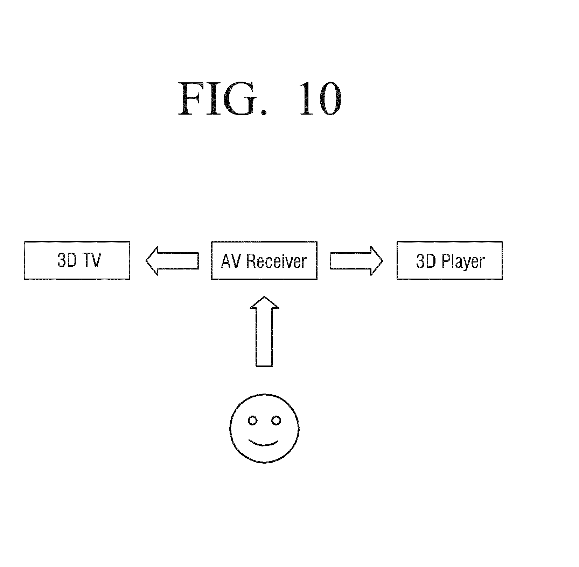

FIG. 10 is a view explaining a method for controlling a 3D image of a 3D image playing apparatus using an image playing apparatus, according to another exemplary embodiment.

Referring to FIG. 10, an image apparatus (for example, an AV receiver) comprising a means for detecting location information of a user may be connected to a 3D TV or a 3D player according to the high-definition multimedia interface (HDMI) standard. The AV receiver may detect the location information of the user. The method for detecting the user's location has been described above and thus a detailed description thereof is omitted. The location information of the user (for example, distance data of the user) detected by the AV receiver may be transmitted to the 3D TV or the 3D player for displaying a 3D image.

The 3D TV or the 3D player which has received the distance data of the user adjusts the 3D image by increasing or reducing depth by adjusting the disparity of the 3D image according to the distance data information detected by the AV receiver. The adjusted 3D image is displayed. According to an exemplary embodiment, the location of the user may be detected by an apparatus that is able to determine the location of the user, but is not able to display a 3D image. The 3D image may be transmitted to an apparatus that is able to display the 3D image. Accordingly, the location of the user may be detected using the AV receiver having a related-art multi-channel speaker, and the location data of the user may be used as information for adjusting the 3D image by the apparatus that is able to display the 3D image.

The image apparatus may comprise a means for detecting location information, such as an infrared detector, an ultrasonic wave detector, and a location detector using a camera.

Also, the image apparatus may adjust the depth by changing the disparity based on the location information of the user obtained through the infrared detector, so that the user can feel the optimal depth according to his/her location. The image apparatus transmits the 3D image information having the adjusted depth to the 3D TV or 3D player through the HDMI. The 3D TV or the 3D player which has received the adjusted 3D image information may display the 3D image so that the user can experience the optimal 3D effect at his/her current location.

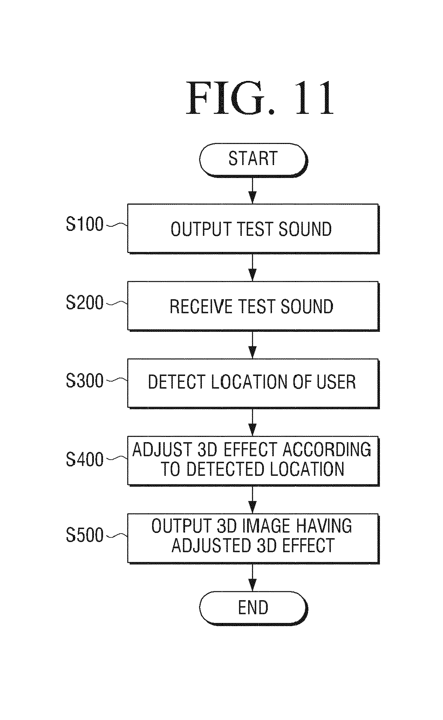

FIG. 11 is a flowchart illustrating a method for controlling a 3D image according to another exemplary embodiment.

Referring to FIG. 11, a method for controlling a 3D image of a 3D image playing apparatus will be explained.

The method for controlling the 3D image comprises outputting a test sound (S100), receiving the test sound (S200), detecting a location of a user (S300), adjusting a 3D effect according to the detected location (S400), and outputting a 3D image having the adjusted 3D effect (S500).

The operation of outputting the test sound (S100) refers to an operation of outputting a plurality of test sounds using a plurality of speakers.

The operation of receiving the test sound (S200) refers to an operation of receiving the plurality of test sounds by a receiver. In the present embodiment, the user carries the receiver and the receiver may be a receiver which receives various types of signals, such as a microphone, an infrared receiver, an ultrasonic wave receiver, or a light receiver.

The operation of detecting the location (S300) refers to an operation of receiving feedback of the test sounds and analyzing the test sounds, thereby detecting the location of the receiver. The method for analyzing the received test sounds has been described above and thus a detailed description thereof is omitted.

The operation of adjusting the 3D effect (S400) refers to an operation of adjusting a 3D effect of the 3D image according to the detected location of the receiver. The 3D effect of the 3D image is adjusted according a distance between the receiver and the 3D image playing apparatus. Specifically, in order to adjust the 3D effect according to whether the receiver is located at a long distance or a short distance from the 3D image playing apparatus, disparity is increased or reduced.

The operation of outputting the 3D image (S500) refers to an operation of outputting the 3D image having the adjusted 3D effect. A display apparatus may display the 3D image and may reflect depth that is adjusted according to a change in disparity of the 3D image.

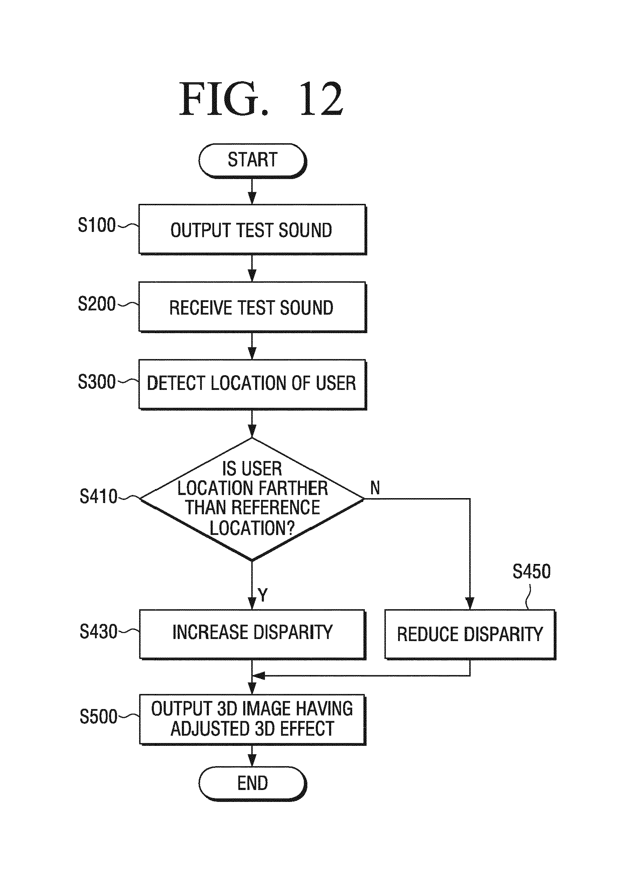

FIG. 12 is a flowchart illustrating the method for controlling the 3D image in detail according to another exemplary embodiment.

Referring to FIG. 12, the operation of adjusting the 3D effect (S400) in the method for controlling the 3D image performs an operation of analyzing a time difference between a test sound outputting time of each of the plurality of speakers and a test sound receiving time of the receiver. Using the analyzed time difference, a distance between each of the speakers and the receiver is recognized and the location of the receiver is detected.

The operation of adjusting the 3D effect increases the disparity of the 3D image, in response to the receiver being located closer than a reference location distanced from the 3D image playing apparatus by a predetermined distance (S430), and reduces the disparity of the 3D image, in response to the receiver being located farther than the reference location (S450). Herein, the reason why it is determined whether the receiver is at a long distance or short distance with reference to the reference location is that, in response to the distance to the receiver being a short distance, the 3D effect of the 3D image is reduced, and, in response to the receiver being a long distance, the 3D effect of the 3D image is increased. Accordingly, in response to the receiver being located at the short distance, the disparity of the 3D image should be increased, and in response to the receiver being at the long distance, the disparity of the 3D image should be reduced.

In the operation of adjusting the 3D effect (S400), the disparity should be reduced or increased until the depth is the same as the depth at the reference location. That is, in order to adjust the depth at the location of the receiver to be the same as the depth at the reference location, the depth should be reduced by reducing the disparity in the case of the long distance. On the other hand, in the case of the short distance, the depth should be increased by increasing the disparity.

In the operation of adjusting the 3D effect (S400), depth information or disparity information which is pre-stored according to the location of the receiver may be read out and the 3D effect of the 3D image may be adjusted based on the read-out information.

According to another exemplary embodiment, instead of using the plurality of speakers, the receiver, and the location detector shown in FIGS. 11 and 12, the distance from the 3D image playing apparatus to the user may be measured by using infrared rays, and the location of the user may be detected.

Also, using ultrasonic waves, the distance from the 3D image playing apparatus to the user may be measured and the location of the user may be detected.

Also, the location of the user may be detected by photographing an image of the user by a camera, digitally signal-processing the photographed image, and calculating the distance from the 3D image playing apparatus to the user.

Instead of detecting the location of the user by the location detecting means, the user may directly input the location data of the user. In the method of directly inputting the location data of the user, the user may directly input the distance data of the user through a user interface. The distance data may be input in various forms, such as by a number, text, or a combination of these, according to a format of the user interface.

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, as many alternatives, modifications, and variations will be apparent to those skilled in the art.

## Claims

1. A 3D image playing apparatus comprising:
a location sensor which detects a location of a user;
a 3D processor which adjusts a 3D effect of a 3D image by increasing or reducing disparity so that a depth recognized at the location of the user is the same as a depth recognized at a reference location; and
a display unit which outputs the 3D image having the 3D effect adjusted by the 3D processor.

2. The 3D image playing apparatus as claimed in claim 1, wherein the location sensor comprises a plurality of speakers which output a plurality of test sounds, a receiver which receives the test sounds output from the plurality of speakers, and a location detector which detects a location of the receiver by receiving feedback of the test sounds received at the receiver and analyzing the test sounds.

3. The 3D image playing apparatus as claimed in claim 2, wherein the location detector detects the location of the receiver by analyzing a time difference between a time at which each of the plurality of speakers outputs the test sound and a time at which the receiver receives each of the test sounds, and recognizing a distance between each of the speakers and the receiver.

4. The 3D image playing apparatus as claimed in claim 2 or 3, wherein, in response to the receiver being located closer than a reference location distanced from the 3D image playing apparatus by a predetermined distance, the 3D processor increases disparity of the 3D image,
wherein, in response to the receiver being located farther than the reference location, the 3D processor reduces the disparity of the 3D image.

5. The 3D image playing apparatus as claimed in claim 3 or 4, wherein the 3D processor increases or reduces the disparity so that a depth recognized at the location of the receiver is the same as a depth recognized at the reference location.

6. The 3D image playing apparatus as claimed in any one of claims 2 to 4, further comprising a storage unit which stores depth information or disparity information according to the location of the receiver,
wherein the 3D processor adjusts the 3D effect of the 3D image based on information stored in the storage unit.

7. The 3D image playing apparatus as claimed in claim 1, wherein the location sensor comprises an infrared detector or an ultrasonic wave detector which measures a distance from the 3D image playing apparatus to the user.

8. The 3D image playing apparatus as claimed in claim 1, wherein the location sensor comprises a camera which photographs the user and estimates a distance from the 3D image playing apparatus to the user according to a size of a photographed user image.

9. The 3D image playing apparatus as claimed in claim 1, wherein the display unit displays a user interface window through which the user directly inputs distance data,
wherein the location sensor detects the location of the user based on the distance data input through the user interface window.

10. A method for controlling a 3D image of a 3D image playing apparatus, the method comprising:
detecting a location of a user; adjusting a 3D effect of a 3D image by increasing or reducing disparity so that a depth recognized at the location of the user is the same as a depth recognized at a reference location; and
outputting the 3D image having the adjusted 3D effect.

11. The method as claimed in claim 10, wherein the detecting the location of the user comprises:
outputting a plurality of test sounds using a plurality of speakers; and
in response to the plurality of test sounds being received at a receiver, detecting a location of the receiver by receiving feedback of the test sounds and analyzing the test sounds.

12. The method as claimed in claim 10 or 11, wherein the detecting the location of the receiver comprises detecting the location of the receiver by analyzing a time difference between a time at which each of the plurality of speakers outputs the test sound and a time at which the receiver receives each of the test sounds and recognizing a distance between each of the plurality of speakers and the receiver.

13. The method as claimed in claim 10 or 11, wherein the adjusting the 3D effect of the 3D image comprises:
in response to the receiver being located closer than a reference location distanced from the 3D image playing apparatus by a predetermined distance, increasing disparity of the 3D image; and
in response to the receiver being located farther than the reference location, reducing the disparity of the 3D image.

14. The method as claimed in any one of claims 10 to 13, wherein the adjusting the 3D effect of the 3D image comprises increasing or reducing the disparity until a depth at the location of the receiver is the same as a depth at the reference location.

15. The method as claimed in any one of claims 10 to 14, wherein the adjusting the 3D effect of the 3D image comprises reading out depth information or disparity information which is pre-stored according to the location of the receiver, and adjusting the 3D effect of the 3D image.
